**Europäisches Patentamt**

(19) **European Patent Office**

**Office européen des brevets**

(11) Numéro de publication: **0 134 366**
**B1**

(12) **FASCICULE DE BREVET EUROPEEN**

(45) Date de publication du fascicule du brevet:
**10.12.86**

(21) Numéro de dépôt: **83401623.0**

(22) Date de dépôt: **05.08.83**

(51) Int. Cl.⁴: **B 23 D 33/00**

(54) **Procédé et installation pour le traitement de tôles brutes issues d'un laminoir à produits plats.**

(43) Date de publication de la demande:
**20.03.85 Bulletin 85/12**

(45) Mention de la délivrance du brevet:
**10.12.86 Bulletin 86/50**

(84) Etats contractants désignés:
**AT BE DE GB IT LU NL**

(56) Documents cités:
**BE - A - 676 312**
**FR - A - 1 580 133**
**FR - A - 2 384 597**

(73) Titulaire: **UNION SIDERURGIQUE DU NORD ET DE L'EST DE LA FRANCE par abréviation "USINOR", La Défense 9, 4, place de la Pyramide, F-92800 Puteaux (FR)**

(72) Inventeur: **Reichert, Joseph, Allée des Myosotis, F-54530 Pagny sur Moselle (FR)**
Inventeur: **Gillet, Hervé, 3 Avenue d'Huart, F-54400 Longwy (FR)**
Inventeur: **Stasser, Jean-Michel, 77 rue de Montmédy, B-6734 Lamorteau (BE)**

(74) Mandataire: **Moncheny, Michel et al, c/o Cabinet Lavoix 2 Place d'Estienne d'Orves, F-75441 Paris Cedex 09 (FR)**

## Description

La présente invention est relative au traitement de tôles brutes (appelées ci-après tôles-mères) de forte épaisseur et de grandes dimensions sortant d'un laminoir.

Le traitement de produits issus d'un train de laminoir à produits plats comporte tout d'abord une détermination d'«inscriptibilité» dans la tôle brute, puis une mise à dimensions nettes à l'aide de cisailles.

Le terme «inscriptibilité» désigne ici la répartition que l'on peut faire dans une tôle-mère donnée, de tôles à découper (appelées ci-après tôles-filles) selon un processus de découpage impliquant une perte minimale de métal compte tenu des irrégularités des bords de la tôle-mère d'une part et des défauts en pleine tôle d'autre part.

Actuellement, la détermination de l'inscriptibilité se fait surtout manuellement par traçage à la craie et par évaluation approximative. Au cours du procédé manuel, le traceur se déplace sur la tôle en repérant la ou les zones utilisables, déclare par estimations approchées l'inscriptibilité partielle ou totale des tôles-filles et procède à une détermination des zones récupérables restantes, s'il y a lieu. Une fois le plan de traçage relevé, il est transmis aux conducteurs de cisailles de rives et de mise à longueur.

Il est évident que ce procédé ne cadre pas avec une industrialisation moderne car il demande une main-d'œuvre importante, conduit à des erreurs de répartition et est donc coûteux.

Pour assister le traceur dans son travail, il est déjà connu de disposer le long de la table à rouleaux sur laquelle la tôle-mère est disposée pour le traçage, une règle munie de sources lumineuses qui permettent de définir une ou plusieurs lignes sur la tôle dans le sens de la longueur. Cependant, il s'est avéré que cette seule mesure ne peut que très médiocrement perfectionner le procédé manuel décrit ci-dessus et n'affranchit nullement le traceur du travail de calcul et de traçage pour la répartition de la tôle-mère dans le sens de la longueur.

L'invention a donc pour but de fournir un procédé et une installation de traitement de tôles-mères sortant d'un laminoir qui soient totalement dépourvus des inconvénients énoncés ci-dessus.

L'invention a donc tout d'abord pour objet un procédé pour le traitement de tôles-mères issues d'un laminoir afin de découper ces tôles en des tôles-filles de dimensions prédéterminées, au cours duquel on procède à la détermination de l'inscriptibilité de chaque tôle-mère pour relever un plan de traçage permettant une utilisation optimale de cette dernière, puis on fait passer chaque tôle-mère dans des moyens de mise en dimensions pour la découpe en tôles-filles, caractérisé en ce que l'opération de détermination de l'inscriptibilité consiste à projeter sur la tôle-mère un réseau de traits lumineux croisés, à déplacer sélectivement chacun de ces traits lumineux parallèlement à lui-même pour délimiter sur la tôle-mère un lot de tôles-filles à obtenir, à relever les coordonnées des traits lumineux par rapport à un système de référence affecté à la tôle-mère et à découper la tôle mère en fonction des coordonnées obtenues.

Grâce à ces caractéristiques, l'opération de traçage peut être exécutée par un opérateur situé dans une cabine d'observation, par une commande appropriée des traits lumineux, ce qui rend ce travail commode et exact, les coordonnées relevées pouvant être transmises facilement aux cisailles de mise en dimensions.

L'invention a également pour objet une installation pour la mise en œuvre du procédé défini ci-dessus.

D'autres caractéristiques de l'invention apparaîtront au cours de la description qui va suivre, donnée uniquement à titre d'exemple et faite en référence aux dessins annexés sur lesquels:

— la fig. 1 est une vue en plan schématique d'une installation suivant l'invention permettant de découper dans une tôle-mère un certain nombre de tôles-filles, conformément à un plan de traçage relevé grâce à cette installation à partir d'un plan de traçage théorique;

— la fig. 2 est une vue en perspective schématique du poste de traçage utilisé dans l'installation suivant la fig. 1;

— la fig. 3 représente par une vue schématique en perspective la commande d'un couple de lasers de traçage de rives, utilisée dans l'installation suivant l'invention;

— la fig. 4 analogue à la fig. 3 montre un laser de traçage de lignes transversales;

— la fig. 5 est un schéma général du circuit de traitement d'information suivant l'invention;

— la fig. 6 est un organigramme général des opérations exécutées par le circuit de la fig. 5;

— la fig. 7 représente une vue schématique en plan d'une tôle-mère au cours du traçage; et

— la fig. 8 est un diagramme géométrique illustrant les calculs effectués pour déterminer l'inscriptibilité d'une tôle-mère cintrée.

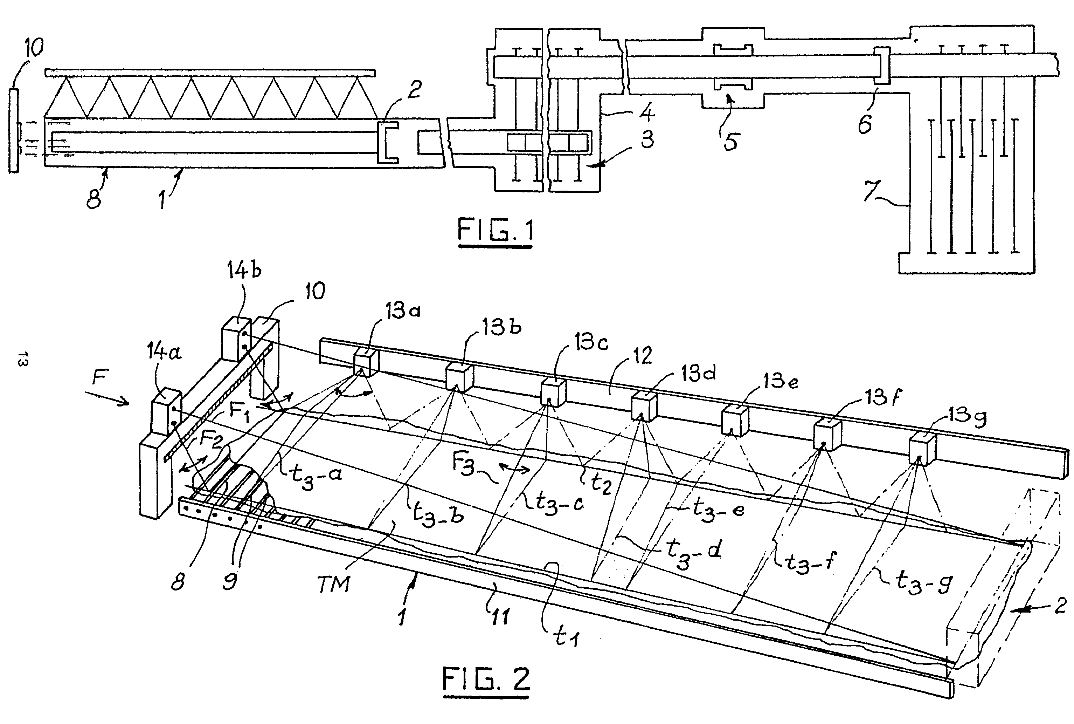

La fig. 1 représente schématiquement une vue en plan d'une installation suivant l'invention. Elle comprend un poste de traçage 1 muni à son extrémité aval d'une cisaille 2 d'éboutage de la tête des tôles-mères TM à la suite de laquelle est prévue une unité de marquage 3. Cette unité est montée au-dessus d'une table de transfert 4 destinée à disposer les tôles à découper sur le trajet d'une cisaille double de rives 5 à laquelle fait suite une cisaille à découper 6. Celle-ci assure le découpage en tôles-filles de la tôle-mère.

Une table d'évacuation 7 de tôles-filles est prévue en fin d'installation.

Le poste de traçage 1 dont une vue en perspective apparaît sur la fig. 2 comporte une table de traçage 8 connue en soi, dont le dessus est formé par un train de rouleaux 9 sur lesquels peut se déplacer la tôle-mère TM en provenance du laminoir (non représenté) à partir duquel elle est obtenue.

A l'extrémité amont de cette table, c'est-à-dire entre celle-ci et la sortie du laminoir est prévu un portique 10 enjambant transversalement le trajet défini pour la tôle. A droite de la table 8 dans le sens de la progression de la tôle, est prévue une règle de rive 11 contre laquelle la tôle-mère est appliquée au cours du traçage. Le long du côté opposé de la table est montée une rampe 12 de sources lumineuses 13a à 13g (sept en l'occurrence), tandis que le portique 10 supporte deux de ces sources indiquées par les références 14a et 14b. Les sources lumineuses sont réalisées de préférence à l'aide de lasers pouvant être masqués à l'aide d'obturateurs lorsque le faisceau qu'ils produisent n'est pas utilisé. Les sources lumineuses 14a et 14b produisent chacune deux faisceaux parallèles F1 et F2 situés dans un même plan et orientés vers le bas sous des angles différents et sont ainsi à même de matérialiser sur la tôle-mère des traits lumineux longitudinaux $t_1$ et $t_2$. Si des lasers sont utilisés, les faisceaux F1 et F2 peuvent être issus de lasers à faisceau à optique cylindrique ou à balayage de manière que ces faisceaux frappent toute la longueur de la tôle selon une séquence prédéterminée.

Les sources lumineuses 13a à 13g produisent chacune un faisceau lumineux F3 de manière à projeter sur la tôle autant de traits transversaux $t_3$-a à $t_3$-g. Ces faisceaux sont produits de préférence par des lasers à balayage dans un plan variable. Les sources 13a à 13g dans leur ensemble sont montées oscillantes sur des supports (décrits ci-après en détail) afin que les traits qu'ils produisent puissent être placés au choix de l'opérateur à un endroit prédéterminé variable d'une zone de la tôle-mère à laquelle le laser considéré est affecté.

En d'autres termes, les traits $t_3$-a à $t_3$-g peuvent se déplacer dans le sens longitudinal au gré de l'opérateur, par une commande appropriée des mouvements des sources lumineuses 13a à 13g.

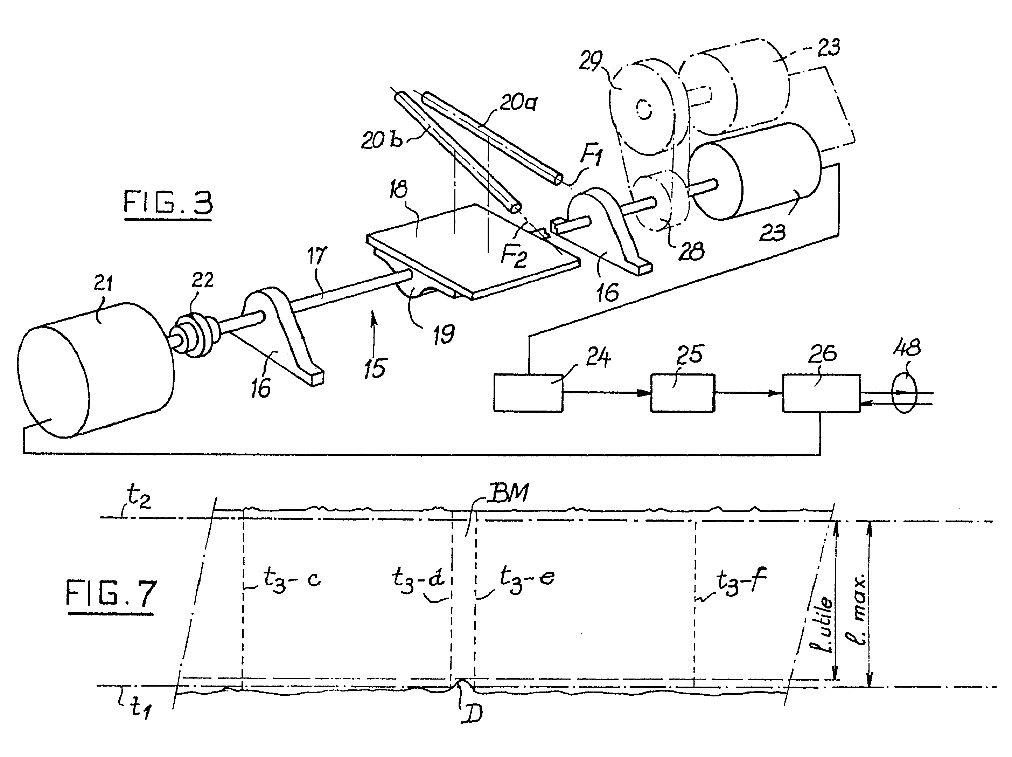

La fig. 3 montre un schéma d'un mécanisme 15 de déplacement des sources lumineuses 14a et 14b. Ce mécanisme comprend des paliers 16 qui sont fixés sur le portique 10 et dans lesquels est montée une vis à billes 17. Un chariot de support 18 comportant des écrous 19 est monté mobile en translation sur la vis lorsque celle-ci est entraînée en rotation. Ce chariot supporte l'une ou l'autre des sources lumineuses 14a ou 14b pourvues ici chacune de deux lasers 20a et 20b produisant respectivement les faisceaux F1 et F2.

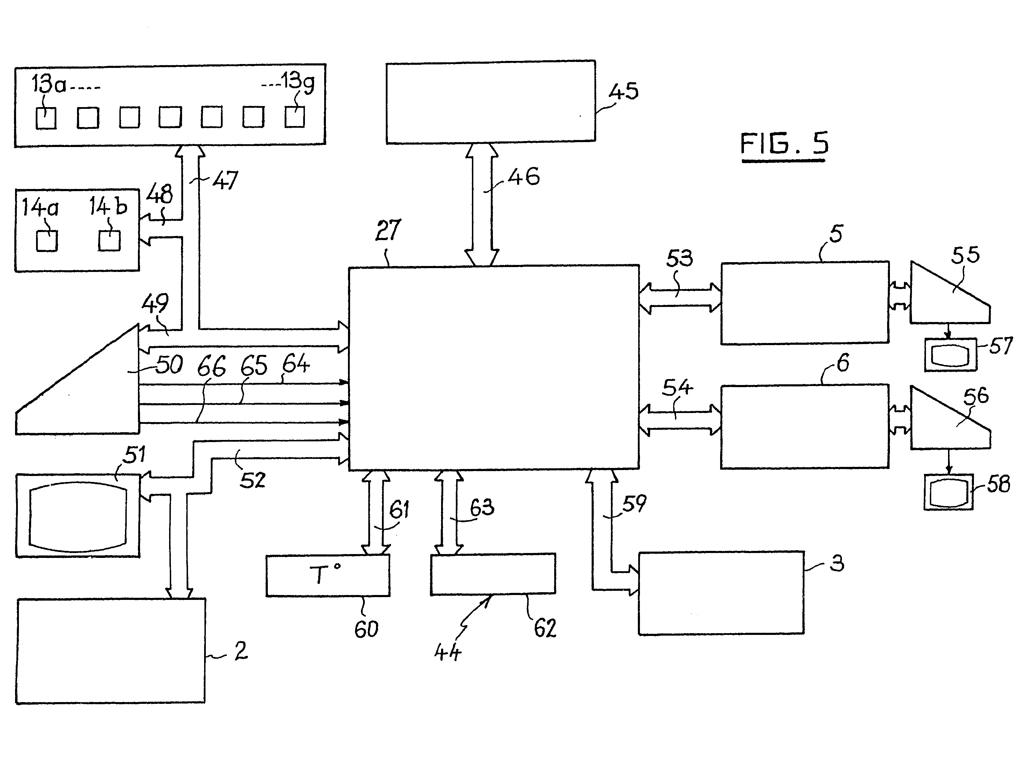

La vis 17 peut être entraînée en rotation par un moteur pas à pas 21 par l'intermédiaire d'un accouplement 22. Un codeur angulaire 23 de préférence du type absolu à multi-tours est couplé également à la vis 17. Ce codeur est capable d'engendrer un code binaire du type «Gray» dont la valeur est une fonction du déplacement linéaire du chariot 18 le long de la vis 17. Ce code est converti en un code binaire pur dans un convertisseur 24 suivi d'un circuit 25 de correction des tolérances de mesure et d'une unité 26 de calcul et de commande qui est reliée au moteur pas à pas 21 et également à un ordinateur 27 (fig. 5) qui sera décrit par la suite.

Le mécanisme 15 destiné à la source lumineuse 14b comporte en outre un réducteur 28, 29 en raison de la longueur relativement grande de la vis sans fin 17 de ce mécanisme. Ce réducteur est couplé également à un codeur 23 et représenté en pointillés sur la fig. 3.

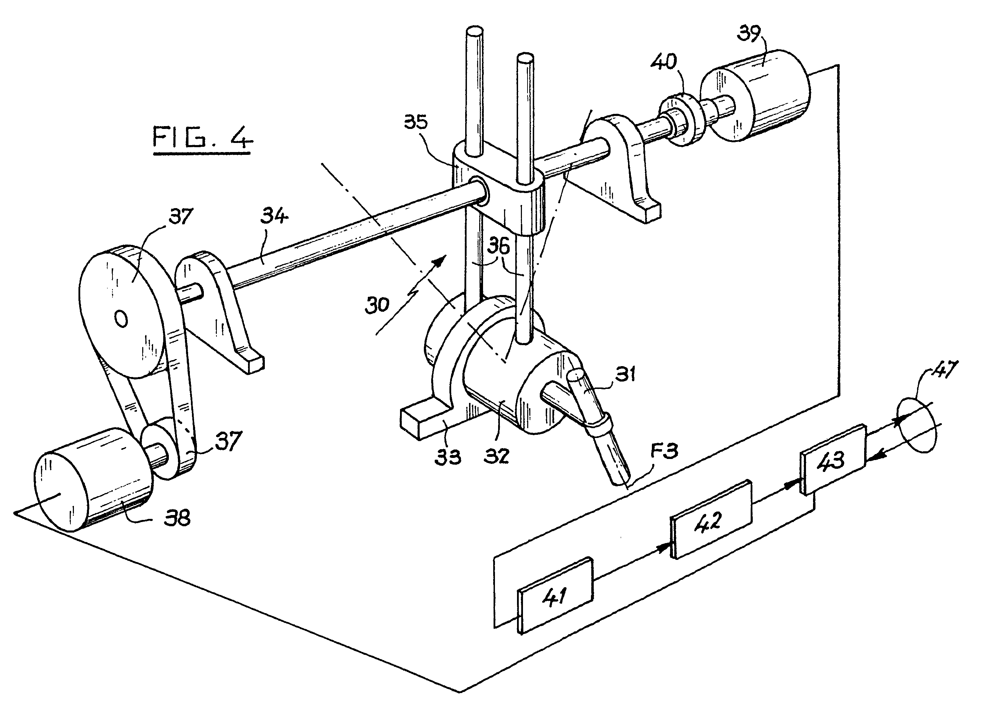

La fig. 4 montre un mécanisme de commande 30 de l'une des sources lumineuses 13a à 13g. Il comporte un laser à balayage 31 monté sur un support 32 oscillant autour d'un axe horizontal, l'axe optique du laser étant incliné par rapport à l'horizontale, de manière que le faisceau F3 puisse tracer un trait transversal sur la tôle-mère TM. Le support oscillant est monté rotatif dans une console fixe 33.

Le mécanisme comporte en outre une vis à billes 34 sur laquelle est montée mobile en translation une noix 35 à travers laquelle passent deux tiges lisses 36 fixées dans le support oscillant 32. La vis 34 est couplée par un réducteur 37 à un moteur pas à pas 38 et à un codeur angulaire 39 par un accouplement 40.

Comme dans le mécanisme 18 des sources 14a et 14b, le codeur 39 est relié à un convertisseur 41 de code Gray en code binaire suivi d'un circuit 42 de compensation des tolérances auquel est raccordée une unité 43 de calcul et de commande qui est reliée à l'ordinateur 27.

La fig. 5 représente un schéma général du circuit de traitement d'information et de commande désigné par la référence 44. Ce circuit comporte comme composant central le micro-calculateur ou ordinateur 27 autour duquel sont regroupés les périphériques suivants.

La gestion généralisée des commandes et de la fabrication des tôles-mères et des tôles-filles est réalisée à l'aide d'un ordinateur central 45 de très grande capacité, qui peut être l'ordinateur de gestion de l'entreprise dans laquelle est implantée l'installation suivant l'invention. Cet ordinateur garde en mémoire et gère notamment les commandes des tôles à livrer aux clients et ces commandes sont transférées par une ligne 46 à l'ordinateur 27 de la présente installation sous la forme d'un document appelé «ticket de traçage». Ce document qui peut être matérialisé sur imprimante comporte notamment les cotes et les caractéristiques métallurgiques des tôles à traiter.

L'ordinateur 27 est également connecté par des lignes 47, 48 et 49 respectivement aux sources lumineuses 13a à 13g et 14a, 14b, à un pupitre 50 de commande de traçage, et à un moniteur 51 ou autre dispositif d'affichage par une ligne 52, tous ces composants étant disposés dans le poste de traçage 1.

Les informations obtenues au cours du traçage sont transférées à l'ordinateur de gestion 45 et également par des lignes 53 et 54 aux cisailles 5 et 6 qui sont pourvues de pupitres de commande 55 et 56 et d'écrans d'affichage 57 et 58. Elles sont envoyées également quant aux abscisses relevées au cours du traçage, à l'unité de marquage 3 par une ligne 59, cette unité étant destinée à apposer sur chaque tôle-fille à découper un libellé complet d'identification.

La cisaille à ébouter 2 est reliée à l'ordinateur 27 par la ligne 52.

Un dispositif 60 de mesure de la température est prévu pour apporter des corrections de longueur et

compenser ainsi l'éventuelle dilatation des tôles en fonction de la température. Ce dispositif est relié à l'ordinateur 27 par une ligne 61. Un autre dispositif 62 relié à cet ordinateur par une ligne 63 permet, le cas échéant, de tenir compte des changements d'épaisseur d'une tôle à l'autre, changements qui peuvent influer sur les mesures relevées par l'intermédiaire des positions des lasers au cours du traçage.

Le pupitre d'opérateur 50 est connecté également à l'ordinateur 27 par d'autres lignes 64, 65 et 66 sur lesquelles transitent des ordres relatifs aux défauts constatés sur les tôles-mères au cours du traçage, tels qu'une tôle cintrée, une tôle en sous longueur, une tôle à défauts non récupérables, etc.

L'installation que l'on vient de décrire a comme rôle primordial de permettre une optimalisation de la répartition des tôles-filles dans les tôles-mères, opération qui est réalisée pour l'essentiel dans le poste de traçage 1 et qui permet ainsi de déterminer ce que les spécialistes appellent «l'inscriptibilité».

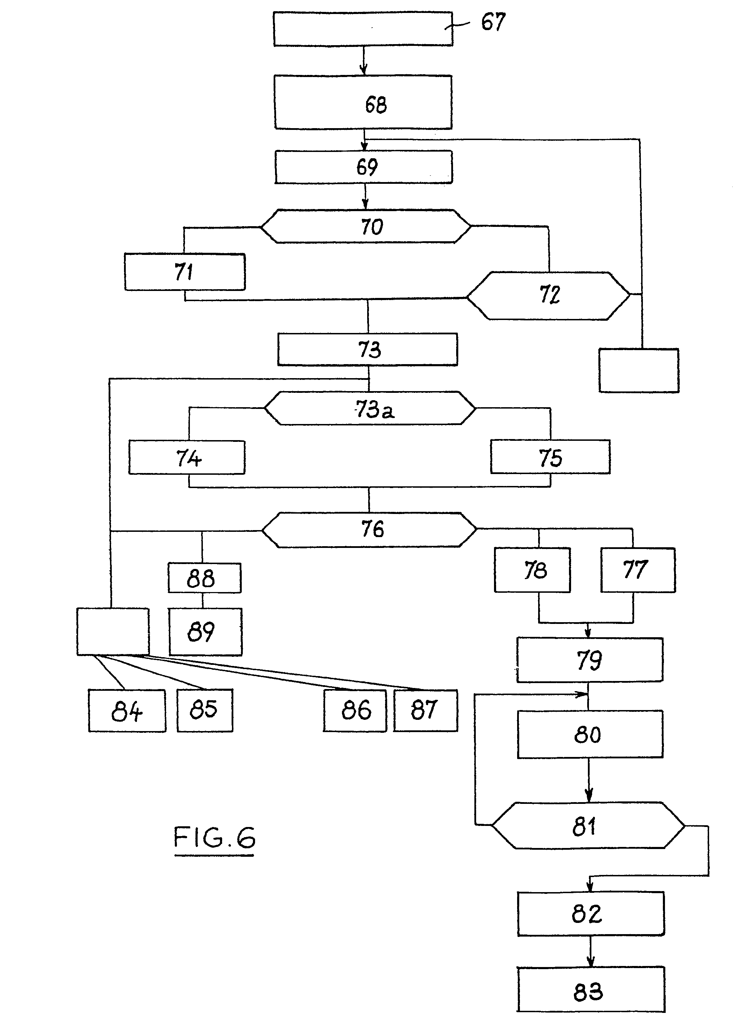

En se référant à la fig. 6, on va maintenant décrire le processus de détermination de l'inscriptibilité qui se déroule dans le poste de traçage à l'aide du circuit 44 de la fig. 5.

A l'arrivée d'une tôle-mère devant la cisaille à ébouter 2, en provenance du laminoir (la tôle passant en dessous du portique 10), l'opérateur demande, au moyen du clavier de son pupitre 50, les caractéristiques de la tôle-mère considérée en précisant le numéro de laminage. Ces caractéristiques consignées dans le «ticket de traçage» sont envoyées dans l'ordinateur 27 par l'ordinateur de gestion 45 et affichées sur l'écran 51 (opérations 67 et 68, fig. 6).

L'ordinateur 27, ayant ainsi reçu les données concernant le positionnement et les caractéristiques des tôles-filles à tracer, commande automatiquement le moteur 21 et la source lumineuse 14b, ce qui déplace le trait lumineux $t_2$ pour déterminer l'emplacement de la rive gauche de la tôle (vu dans le sens du déplacement), cette rive étant appelée ci-après «grande rive». Bien entendu, la tôle progresse en étant appliquée contre la règle 11 par sa rive opposée appelée ci-après «petite rive». Le trait $t_2$ de grande rive est placé à une cote théorique $I_{max}$ de cette règle 11.

La tôle étant positionnée de manière que son bord avant ou «tête» se trouve sous la cisaille 2, elle est éboutée et l'opérateur commande la source lumineuse 14a pour déplacer le trait de petite rive $t_1$, cette commande étant initiée sur le pupitre 50 et transitant vers le mécanisme 15 correspondant (fig. 3) par l'intermédiaire du calculateur 27.

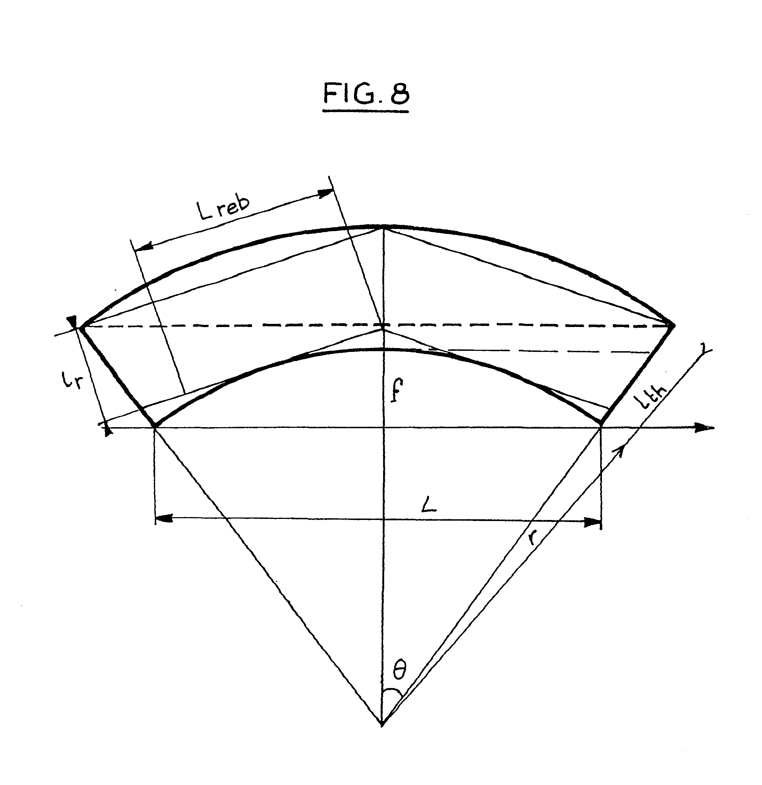

En déplaçant le trait $t_1$, l'opérateur tentera d'écarter autant que possible les irrégularités du bord de petite rive de la tôle-mère (fig. 7), ce qui, dans l'exemple décrit ici, ne peut être réalisé que sous peine de perdre une bande relativement large de la tôle. En effet, dans cet exemple, il est supposé que la tôle-mère comporte un défaut marginal D qu'il s'agit évidemment d'éliminer lors de la découpe en tôles-filles. (On notera que l'importance des défauts a été fortement exagérée pour le besoin de l'explication.)

Ayant ainsi déplacé le trait $t_1$, l'opérateur valide la position choisie sur son pupitre 50, ce qui introduit les données correspondantes dans la mémoire de l'ordinateur 27 (opération 69, fig. 6).

Pendant le réglage du trait $t_1$, les lasers 14a et 14b sont déplacés de concert de la même amplitude et dans le même sens de sorte que les traits $t_1$ et $t_2$ conservent le même écartement $I_{max}$.

L'opérateur vérifie si, dans ces conditions, l'inscriptibilité en largeur est correcte (pas de défaut à droite du trait $t_2$ vu dans le sens de l'avancement de la tôle). Si elle est correcte, l'inscriptibilité en largeur est déterminée et la position du trait $t_2$ est validée par l'opérateur et mise en mémoire dans l'ordinateur 27. Dans le cas contraire, l'opérateur effectue une correction pour ensuite valider la nouvelle position (opération 70), ce qui donne lieu à une largeur utile inférieure à la largeur maximale (cas qui n'est pas représenté sur la fig. 7).

Du fait de la présence du défaut D dans la rive opposée, la tôle-mère a, dans l'exemple représenté, une largeur utile $I_u$ effectivement plus faible que la largeur $I_{max}$, mais ce défaut est éliminé d'une autre manière comme on va le voir, les tôles-filles découpées en définitive ayant donc la largeur $I_{max}$, malgré la présence du défaut.

Les données d'inscriptibilité en largeur utile et en largeur maximale apparaissent sur l'écran 51 de l'opérateur (opérations 71 et 72).

L'installation est alors prête à recevoir les données conduisant à l'inscriptibilité en longueur de la tôle-mère TM. La cisaille à ébouter 2 fournit une référence de longueur de celle-ci après avoir ébouté la tête de la tôle et/ou procédé à la découpe d'un échantillon. Toutefois, selon une variante, cette référence de longueur peut également être obtenue optiquement à l'aide de l'un des lasers transversaux (13a à 13g). Ce laser sera alors appelé «laser de tête».

L'opérateur sélectionne et positionne alors l'un des lasers transversaux de la rampe 12, en fonction de la longueur théorique de la tôle (laser de pied), de manière à écarter toute irrégularité au bord opposé de la tête et valide la position ainsi choisie. Cette opération fournit alors à l'ordinateur 27 une valeur de longueur utile comprise entre la lame de la cisaille 2 et la position validée du laser de pied compte tenu, le cas échéant, de la prise d'échantillon à la tête de la tôle. Des échantillons peuvent éventuellement être délimités en d'autres endroits de celle-ci et les données de longueur y relatives sont extraites de l'ordinateur de gestion 45 qui par l'intermédiaire de l'ordinateur 27 les applique aux lasers concernés de la rampe 12.

La position du laser de pied est alors validée (opération 73).

L'ordinateur 27 ayant reçu des données de température par l'organe 60 (fig. 5), une interrogation est faite s'il convient de corriger la valeur de la longueur relevée pour compenser la dilatation. (Opérations 73a.) L'opérateur peut ensuite valider cette longueur (74) ou la corriger (75).

En l'absence de défauts, l'ordinateur 27 est maintenant à même d'inscrire dans la tôle-mère TM un certain nombre de tôles-filles (opération 76) compte tenu, d'une part, du ticket de traçage qu'il a reçu de l'ordinateur 45 et, d'autre part, des dimensions relevées par les lasers de rive et le laser de pied.

Divers sous-programmes peuvent se brancher sur cette dernière opération.

Tout d'abord, comme représenté sur la fig. 7, l'opérateur peut (en 77) procéder à une délimitation des «bandes mortes» BM pour isoler dans la tôle le défaut D (ou un autre défaut situé ailleurs dans la tôle) par une commande appropriée des lasers qui sont ici les lasers 13d et 13e.

L'opérateur peut également délimiter une bande de prélèvement supplémentaire (en 78), après quoi le programme passe à une opération de demande de traçage en 79 qui déclenche le calcul par l'ordinateur du traçage définitif de la tôle en fonction de toutes les données précédemment introduites. L'ordinateur positionne tous les lasers du laser 13a au laser de pied; en conséquence, le résultat est affiché sur l'écran 51 (opération 80).

Si en 81 l'opérateur souhaite modifier ce traçage définitif, le programme reboucle sur l'opération 80 afin qu'un traçage corrigé puisse être établi.

Le programme passe ensuite à une opération 82 de validation de marquage, ce qui bloque toute modification dans le poste de traçage 1, le plan de traçage étant alors maintenu figé jusqu'à évacuation de la tôle.

Bien entendu, après la validation, l'ordinateur 27 emmagasine toutes les données dans sa mémoire (83).

Dans la description qui précède, on a supposé que la tôle-mère traitée permet dans tous les cas une répartition en tôles-filles conformément au ticket de traçage et aux commandes définissant les paramètres des tôles-filles, compte tenu des tolérances propres de la tôle-mère, de la température, de l'épaisseur de la tôle, etc.

Toutefois, dans certains cas, l'accumulation des tolérances ne permet pas d'effectuer le traçage avec une répartition optimale et, dans ce cas, l'installation suivant l'invention permet de trouver un compromis de répartition conduisant néanmoins à une utilisation optimale de la matière de la tôle-mère tout en respectant les tolérances exigées au niveau du produit sortant de l'installation.

D'une façon générale, les tôles-filles sont commercialisées avec une cote $c_n$ nominale en longueur qui sauf exception, à décrire par la suite, ne doit jamais être dépassée vers le bas. Au contraire, les tôles sont livrées à cette cote nominale majorée d'une tolérance positive $e$, l'usage voulant que la longueur du produit livré présente autant que possible la cote $c_n + e$ appelée longueur maximale $L_{max}$.

Lorsqu'à la fin de l'opération 76 du processus (fig. 6), l'opérateur a déterminé et validé la longueur utile $L_u$ de la tôle-mère, il se peut que cette longueur soit insuffisante compte tenu de la longueur de la bande de prélèvement pour qu'à la découpe les tôles-filles exigées par le ticket de traçage présentent toutes une cote $c_n + e$.

Si la longueur utile $L_u$ de la tôle-mère est alors supérieure à la somme des longueurs de cote $c$ des tôles-filles et de la cote minimale de la bande de prélèvement, l'ordinateur 27 effectue un calcul de moyenne affectant lors du traçage une longueur aux tôles-filles de valeur $c_n < c < c_n + e$. (Opération 84; fig. 6.)

Par contre, si la longueur utile $L_u$ est inférieure à la somme des longueurs de cote $c$ des tôles-filles et de la bande de prélèvement, l'ordinateur est programmé de manière à établir une répartition qui élimine une ou plusieurs tôles-filles, la chute de la tôle-mère étant alors recyclée (opération 85).

Dans certains cas, les tôles-filles peuvent être fabriquées avec une tolérance se situant autour de la valeur nominale, par exemple dans le cas où ces tôles servent à fabriquer des tubes.

Dans ce cas, après la détermination de la longueur utile $L_u$ de la tôle-mère en 76, l'opérateur introduit les valeurs limites $L_M$ et $L_m$ de la plage de tolérances admises. L'ordinateur 27 est alors configuré de manière à exécuter un sous-programme de répartition (opération 86) basée sur un calcul visant à établir le nombre $x$ de tôles de longueur $L_M$ et le nombre $y$ de longueur $L_m$.

Dans un premier temps, ce sous-programme vérifie si $L_u$ est divisible par $L_M$, si oui, l'ordinateur indique le nombre $x = L_u/L_M$ de tôles de longueur maximale $L_M$, le nombre $y$ de tôles de longueur minimale $L_m$ étant alors égal à zéro.

Si $L_u$ n'est pas divisible par $L_M$, l'ordinateur exécute l'algorithme:

$$x = E \left[ \frac{L_u - E\left[\dfrac{L_u}{L_m}\right] \cdot L_M}{L_M - L_m} \right]$$

$$y = E \left[ \frac{L_u}{L_m} \right] - x$$

dans lesquels:

  $x$ = nombre de tôles de longueur $L_M$ (maximale)
  $y$ = nombre de tôles de longueur $L_m$ (minimale)
  $L_u$ = longueur utile de la tôle-mère
  $E$ = facteur indiquant le rapport de la somme des longueurs des tôles-filles à la longueur utile de la tôle-mère.

Cet algorithme permet donc à l'ordinateur 27 de déterminer le nombre maximal de tôles-filles que l'on peut tracer dans une tôle-mère considérée.

Le sous-programme peut inclure des instructions mises en œuvre au gré de l'opérateur conduisant à un traçage de tôles-filles dont les longueurs sont intermédiaires entre $L_M$ et $L_m$ selon la formule:

$$L_M > L_i = \frac{L_u - xL_M}{y} > L_m$$

dans laquelle $L_1$ est la longueur intermédiaire des tôles-filles.

L'ordinateur peut également mettre en œuvre un sous-programme de répartition (opération 87) tenant compte des défauts existant dans la tôle-mère et repérés auparavant. Dans ce cas, l'ordinateur 27 considère chaque tronçon de la tôle-mère TM dépourvu de défaut comme une tôle-mère de longueur L'$_u$ qui est considérée comme une nouvelle tôle-mère dans laquelle la répartition peut être établie comme décrit ci-dessus.

Le sous-programme comporte des instructions permettant de regrouper les bandes non utilisables dans ces tôles-mères «secondaires» par suite du calcul de répartition, avec des bandes pourvues de défaut, ce qui conduit à une utilisation optimale de matière.

L'opérateur ayant constaté que la largeur utile l$_u$ acquise pendant l'opération 70 n'est pas suffisante, il examine visuellement la tôle pour constater que la tôle est soit en sous-largeur, soit de forme cintrée de sorte qu'une répartition en longueur correcte ne peut être effectuée normalement. Les tôles sont d'une façon générale, toujours présentées sur la table de traçage I de manière que leur bord concave soit tourné vers la règle 11.

S'il constate que la tôle est cintrée, l'opérateur déclenche (opération 88) le sous-programme «tôle cintrée», (opération 89) et l'ordinateur 27 peut alors calculer l'inscriptibilité selon l'algorithme suivant (fig. 8).

$$I_r = I_{th} \left[ 1 - \frac{2f^2}{L^2} \right] - \frac{f}{4} \left[ 1 + \frac{4f^2}{L^2} \right]$$

$$L_r + L_{reb} = L \left[ \frac{1 + \frac{4f^2}{L^2} + \sqrt{1 + \frac{4f^2}{L^2}}}{2} \right]$$

dans lesquelles:

I$_r$ = largeur récupérable de la tôle-mère cintrée
I$_{th}$ = largeur théorique de la tôle-mère cintrée
f = flèche de l'arc intérieur (côté règle 11) de la tôle-mère cintrée
L = longueur de la corde de l'arc intérieur
L$_r$ = longueur récupérable
L$_{reb}$ = longueur récupérable après éboutage de la tôle-mère.

Le calcul de L$_{reb}$ et de L$_r$ permet de déterminer l'inscriptibilité en largeur par comparaison de l$_r$ et de l$_{max}$ des tôles-filles à tracer et le nombre de tôles-filles à répartir sur la longueur récupérable.

Après l'opération 83 de stockage des informations d'inscriptibilité, l'ordinateur 27 peut être commandé pour transmettre les données correspondantes aux autres organes de l'installation de coupe et notamment à la machine de marquage 3, à la cisaille de rive 5 et à la cisaille de mise en longueur 6, les données pouvant également être stockées dans l'ordinateur 45 de gestion centrale.

L'unité de marquage 3 reçoit les données de longueur correspondant aux débuts des tôles-filles et à l'aide de ces données appose une marque sur les tôles-filles ainsi identifiées.

Il peut en être de même en ce qui concerne les cisailles 5 et 6 qui peuvent être commandées directement par les données d'inscriptibilité relevées dans le poste de traçage ou bien être commandées par un opérateur recevant ces données et les introduisant sur le pupitre de commande appartenant aux cisailles.

Dans ce dernier cas, un plan de découpe des tôles-filles est transmis à l'opérateur de la cisaille 6. Il comporte la suite des consignes de positionnement de la butée mobile de la cisaille nécessaires à l'obtention des tôles-filles.

## Revendications

1. Procédé pour le traitement de tôles brutes ou tôles-mères (TM) issues d'un laminoir afin de découper ces tôles en des tôles-filles de dimensions prédéterminées, au cours duquel on procède à la détermination de l'inscriptibilité de chaque tôle-mère pour relever un plan de traçage permettant une utilisation optimale de cette dernière, puis on fait passer chaque tôle-mère dans des moyens (5, 6) de mise en longueur et en largeur pour la découpe en tôles-filles, caractérisé en ce que l'opération de détermination de l'inscriptibilité consiste à projeter sur la tôle-mère (TM) un réseau de traits lumineux croisés (t$_1$, t$_2$, t$_3$-a à t$_3$-g), à déplacer sélectivement chacun de ces traits lumineux parallèlement à lui-même pour délimiter sur la tôle-mère un lot de tôles-filles à obtenir, à relever les coordonnées des traits lumineux par rapport à un système de référence affecté à la tôle-mère et à découper la tôle-mère en fonction des coordonnées obtenues.

2. Procédé suivant la revendication 1, caractérisé en ce qu'il consiste à ébouter l'un des petits bords de la tôle-mère (TM) pour obtenir la référence de longueur dudit système de référence.

3. Procédé suivant la revendication 1, caractérisé en ce que la référence de longueur du système de coordonnées est établie par un trait lumineux projeté transversalement par rapport à la tôle-mère (TM).

4. Procédé suivant l'une quelconque des revendications 1 et 3, caractérisé en ce que l'un des traits lumineux s'étendant longitudinalement sur la tôle-mère (TM) constitue la référence de largeur dudit système de référence.

5. Procédé suivant l'une quelconque des revendications 1 à 4, caractérisé en ce que l'opération de détermination de l'inscriptibilité consiste d'abord à manœuvrer les traits longitudinaux (t$_1$ et t$_2$) pour déterminer l'inscriptibilité en largeur (largeur utile l$_u$) puis à manœuvrer les traits transversaux pour déterminer l'inscriptibilité en longueur (longueur utile L$_u$).

6. Procédé suivant la revendication 5, caractérisé en ce qu'au cours de l'opération d'inscriptibilité en largeur, on manœuvre l'un des traits lumineux longitudinaux (t$_1$) pour écarter les irrégularités de l'un des bords de rive de la tôle-mère et on manœuvre l'autre trait lumineux longitudinal (t$_2$) en fonction d'une largeur théorique, puis on contrôle si cet autre trait lumineux longitudinal écarte les irrégularités de l'autre bord de rive de la tôle mère et on corrige, le cas échéant, la position de ce trait pour écarter une irrégularité de rive plus importante, et enfin on valide les positions des traits lumineux longitudinaux pour relever les coordonnées en largeur.

7. Procédé suivant l'une quelconque des revendications 5 et 6, lorsqu'elles dépendent de la revendication 2 ou 3, caractérisé en ce qu'au cours de l'opération d'inscriptibilité en longueur, on manœuvre le trait lumineux de pied se trouvant le plus près de la rive de la tôle-mère opposé au bord de référence de tête, pour délimiter la longueur utile de cette tôle écartant les irrégularités de cette rive, les autres traits lumineux transversaux intermédiaires étant positionnés en fonction des longueurs des tôles-filles à obtenir, et on valide les positions de tous les traits lumineux transversaux pour le relevé des coordonnées en longueur.

8. Procédé suivant la revendication 7, caractérisé en ce qu'au cours de l'opération d'inscriptibilité en longueur, l'on manœuvre au moins certains des traits lumineux transversaux pour écarter des défauts (D) présents dans le champ de la tôle-mère (TM).

9. Procédé suivant l'une quelconque des revendications 7 et 8, caractérisé en ce que lesdits autres traits lumineux transversaux sont manœuvrés automatiquement en fonction de calculs d'optimalisation effectués par un ordinateur (27) dans lequel ont été chargées les données de longueur dudit lot de tôles-filles à obtenir.

10. Procédé suivant la revendication 9, caractérisé en ce qu'il consiste à mesurer la température de la tôle-mère (TM) au cours du traçage et à corriger les positions des traits lumineux transversaux du résultat de cette mesure.

11. Procédé suivant l'une quelconque des revendications 9 et 10, caractérisé en ce qu'il consiste à corriger les positions des traits lumineux transversaux en fonction de l'épaisseur de la tôle-mère (TM).

12. Procédé suivant l'une quelconque des revendications 9 à 11, caractérisé en ce qu'il consiste à positionner les traits lumineux transversaux en fonction des cotes qui correspondent aux limites supérieures des plages de tolérance avec lesquelles les tôles-filles doivent être découpées.

13. Procédé suivant la revendication 12, caractérisé en ce que dans le cas où la somme des longueurs des tôles-filles à obtenir correspondant à ladite limite supérieure, est supérieure à ladite longueur utile (L$_u$) de la tôle-mère (TM), il consiste à établir des longueurs pour les tôles-filles dont les valeurs se situent dans les limites desdites plages de tolérance.

14. Procédé suivant l'une quelconque des revendications 9 et 11, caractérisé en ce qu'il consiste à positionner sélectivement les traits lumineux transversaux pour déterminer une partie dudit lot de tôles-filles ayant une longueur ( L$_M$ ) correspondant à une longueur maximale d'une plage de tolérance et une partie dudit lot ayant une longueur (L$_m$) correspondant à une longueur minimale de cette plage, selon l'algorithme:

$$x = E\left[\frac{L_u - E\left[\frac{L_u}{L_m}\right] \cdot L_M}{L_M - L_m}\right]$$

$$y = E\left[\frac{L_u}{L_m}\right] - x$$

dans lesquelles:

x = nombre de tôles-filles de longueur L$_M$

y = nombre de tôles-filles de longueur L$_m$

E = facteur indiquant le rapport de la somme des longueurs des tôles-filles à ladite longueur utile (L$_u$) de la tôle-mère (TM).

15. Procédé suivant l'une quelconque des revendications 9 à 11, caractérisé en ce que pour effectuer l'inscriptibilité d'une tôle-mère cintrée dans le sens de la longueur, il consiste à positionner ledit réseau de traits lumineux longitudinaux et transversaux selon l'algorithme:

$$l_r = l_{th}\left[1 - \frac{2f^2}{L^2}\right] - \frac{f}{4}\left[1 + \frac{4f^2}{L^2}\right]$$

$$L_r + L_{reb} = L\left[\frac{1 + \frac{4f^2}{L^2} + \sqrt{1 + \frac{4f^2}{L^2}}}{2}\right]$$

dans lesquelles:

l$_r$ = largeur récupérable de la tôle-mère cintrée

l$_{th}$ = largeur théorique de la tôle-mère cintrée

f = flèche de l'arc intérieur (côté règle 11) de la tôle-mère cintrée

L = longueur de la corde de l'arc intérieur

L$_r$ = longueur récupérable

L$_{reb}$ = longueur récupérable après éboutage de la tôle-mère.

16. Installation pour la mise en œuvre du procédé suivant l'une quelconque des revendications précédentes, comprenant une zone de traçage (8), des moyens de mise à dimensions (2, 5, 6) ainsi que des moyens pour déterminer optiquement l'inscriptibilité d'un nombre prédéterminé de tôles-filles dans une tôle-mère, caractérisée en ce que lesdits moyens pour déterminer optiquement l'inscriptibilité comprennent un groupe de premières sources lumineuses (14a, 14b) capables de projeter chacune un trait lumineux longitudinal sur la tôle-mère (TM) parallèlement aux rives longitudinales de celle-ci, ces sources étant montées de façon déplaçable latéralement par rapport à ces rives, un groupe de plusieurs secondes sources lumineuses (13a à 13g) capables de projeter chacune un trait lumineux déplaçable parallèlement à lui-même sur la tôle-mère, transversalement aux rives longitudinales de celle-ci, des moyens (15, 30, 27) de déplacement de ces sources lumineuses, des moyens (23, 39) pour détecter l'évolution de la position de celles-ci et des moyens de traitement d'information (27) capables, en réponse à ladite détection de position, d'élaborer des signaux de commande qui sont appliqués auxdits moyens de déplacement pour positionner les sources selon un plan de traçage prédéterminé.

17. Installation selon la revendication 16, caractérisée en ce que lesdites sources lumineuses (20a, 20b, 31) comportent des lasers à balayage ou à optique cylindrique.

18. Installation suivant l'une quelconque des revendications 16 et 17, caractérisée en ce que lesdits moyens de déplacement comportent un moteur (21, 38) d'entraînement pas-à-pas, couplé à une vis sans fin (17, 34) sur laquelle peut se déplacer, par rotation de ladite vis, un support (19, 35) accouplé à la source considérée et en ce que ledit détecteur est couplé également à ladite vis (17, 34).

19. Installation suivant la revendication 18, caractérisée en ce que les premières sources lumineuses (20a et 20b) sont montées directement sur leur support (18), tandis que ladite vis est montée sur un portique (10) placé devant la zone de traçage (8) et enjambant le trajet des tôles-mères (TM).

20. Installation suivant la revendication 18, caractérisée en ce que les secondes sources lumineuses (31) sont montées chacune sur un organe de montage (32) oscillant autour d'un axe horizontal, organe qui peut tourner autour de cet axe grâce à un mécanisme (35, 36) le couplant audit support (35), l'axe optique de ladite source étant incliné vers le bas, tandis que toutes les secondes sources lumineuses sont montées de distance en distance sur une rampe (12) placée parallèlement le long de la zone de traçage (8).

21. Installation suivant l'une quelconque des revendications 16 à 20, caractérisée en ce qu'un dispositif d'établissement d'une référence de tête (2) est monté à l'extrémité de la zone de traçage (8) opposée aux premières sources lumineuses (14a, 14b).

22. Installation suivant l'une quelconque des revendications 16 à 21, caractérisée en ce qu'elle comporte un ordinateur (27) connecté pour recevoir les signaux de position provenant desdits détecteurs (23, 39) et pour émettre des signaux de commande vers lesdits moyens d'entraînement (15, 30), ledit ordinateur étant en outre relié à un pupitre de commande (50) avec écran de visualisation associé (51).

23. Installation suivant la revendication 22, caractérisée en ce que ledit ordinateur (27) est également connecté à un circuit (60) de détection de la température de la tôle-mère pour compenser la dilatation de la tôle-mère (TM).

24. Installation suivant la revendication 22, caractérisée en ce qu'il est prévu un circuit (62) de détermination de l'épaisseur de la tôle-mère (TM) connecté audit ordinateur (27) pour compenser les erreurs de traçage dues aux différentes épaisseurs des tôles à traiter.

25. Installation suivant l'une quelconque des revendications 21 à 24, caractérisée en ce que ledit ordinateur (27) est relié à des circuits de commande des moyens de mise à dimensions (5, 6) pour la transmission des données de position des sources lumineuses en fin de traçage.

26. Installation suivant l'une quelconque des revendications 22 à 25, caractérisée en ce qu'il est prévu également une unité de marquage (3) pour apposer sur chaque tôle-mère (TM) des indications d'identification des tôles-filles en fonction des signaux de position desdites sources lumineuses provenant dudit ordinateur (27).

## Patentansprüche

1. Verfahren zur Behandlung von aus einem Walzwerk hervorgegangenen Roh- bzw. Mutterblechen (TM), um aus diesen Blechen Tochterbleche vorgegebener Abmessungen auszuschneiden, in dessen Verlauf die Bestimmung der Einschreibbarkeit jedes Mutterbleches zur Aufnahme eines eine optimale Ausnutzung des letzteren gestattenden Anzeichnungsplans vorgenommen wird, dann jedes Mutterblech in Mittel (5, 6) zum Ablängen und Abbreiten für das Ausschneiden der Tochterbleche verbracht wird, dadurch gekennzeichnet, dass der Vorgang der Bestimmung der Einschreibbarkeit auf einem Projizieren eines Netzes von gekreuzten leuchtenden Strichen ($t_1$, $t_2$, $t_3$-a bis $t_3$-g) auf das Mutterblech (TM) einem ausgewählten Verschieben eines jeden dieser leuchtenden Striche parallel zu sich selbst zur Abgrenzung eines Satzes von zu gewinnenden Tochterblechen auf dem Mutterblech, einem Aufnehmen der Koordinaten der leuchtenden Striche bezüglich eines dem Mutterblech zugeordneten Bezugssystems und einem Zerschneiden des Mutterblechs in Abhängigkeit von den gewonnenen Koordinaten beruht.

2. Verfahren nach Anspruch 1, dadurch gekennzeichnet, dass es auf einem Schopfen des einen der kleinen Ränder des Mutterblechs (TM) zur Gewinnung des Längenbezugs des Bezugssystems beruht.

3. Verfahren nach Anspruch 1, dadurch gekennzeichnet, dass der Längenbezug des Koordinatensystems durch einen quer bezüglich des Mutterblechs (TM) projizierten leuchtenden Strich hergestellt wird.

4. Verfahren nach irgendeinem der Ansprüche 1 bis 3, dadurch gekennzeichnet, dass der eine der sich in Längsrichtung auf dem Mutterblech (TM) erstreckenden leuchtenden Striche den Breitenbezug des Bezugssystems bildet.

5. Verfahren nach irgendeinem der Ansprüche 1 bis 4, dadurch gekennzeichnet, dass der Vorgang der Bestimmung der Einschreibbarkeit zunächst auf einem Manövrieren der Längsstriche ($t_1$ und $t_2$) zur Bestimmung der Einschreibbarkeit in der Breite (verwendbare Breite $l_u$), dann auf einem Manövrieren der Querstriche zur Bestimmung der Einschreibbarkeit in der Länge (verwendbare Länge $L_u$) beruht.

6. Verfahren nach Anspruch 5, dadurch gekennzeichnet, dass im Verlaufe des Breiteneinschreibbarkeitsvorgangs der eine der leuchtenden Längsstriche ($t_1$) zur Ausgrenzung der Unregelmässigkeiten des einen der Kantenränder des Mutterblechs manövriert wird und der andere leuchtende Längsstrich ($t_2$) in Abhängigkeit von einer theoretischen Breite manövriert wird, dann kontrolliert wird, ob dieser andere leuchtende Längsstrich die Unregelmässigkeiten des anderen Kantenrands des Mutterblechs ausgrenzt, und ggf. die Lage dieses Strichs zur Ausgrenzung einer wesentlicheren Kantenunregelmässigkeit korrigiert wird, und schliesslich die Lagen der leuchtenden Längsstriche zur Aufnahme der Breitenkoordinaten gültig gemacht werden.

7. Verfahren nach irgendeinem der Ansprüche 5 und 6 in Rückbezug auf den Anspruch 2 oder 3, dadurch gekennzeichnet, dass im Verlaufe des Längeneinschreibbarkeitsvorgangs der leuchtende Fussstrich, welcher sich am nächsten zu der dem Kopf-Bezugsrand gegenüberliegenden Kante des Mutterblechs befindet, zur Abgrenzung der verwendbaren Länge dieses Mutterblechs unter Ausgrenzung der Unregelmässigkeiten dieser Kante manövriert wird, wobei die dazwischen liegenden anderen leuchtenden Querstriche in Abhängigkeit von den Längen der zu gewinnenden Tochterbleche angeordnet werden, und die Lagen aller leuchtenden Querstriche zur Aufnahme der Längenkoordinaten gültig gemacht werden.

8. Verfahren nach Anspruch 7, dadurch gekennzeichnet, dass im Verlaufe des Längeneinschreibbarkeitsvorgangs wenigstens gewisse der leuchtenden Querstriche zur Ausgrenzung von Defekten (D), die im Feld des Mutterbleches (TM) vorhanden sind, manövriert werden.

9. Verfahren nach irgendeinem der Ansprüche 7 und 8, dadurch gekennzeichnet, dass die anderen leuchtenden Querstriche automatisch in Abhängigkeit von Optimalisierungsberechnungen manövriert werden, die von einem Rechner (27) durchgeführt werden, in welchem die Längendaten des Satzes von zu gewinnenden Tochterblechen geladen worden sind.

10. Verfahren nach Anspruch 9, dadurch gekennzeichnet, dass es auf einer Messung der Temperatur des Mutterbleches (TM) im Verlaufe der Anzeichnung und einem Korrigieren der Lagen der leuchtenden Querstriche in Abhängigkeit vom Resultat dieser Messung beruht.

11. Verfahren nach irgendeinem der Ansprüche 9 und 10, dadurch gekennzeichnet, dass es auf einem Korrigieren der Lagen der leuchtenden Querstriche in Abhängigkeit von der Dicke des Mutterbleches (TM) beruht.

12. Verfahren nach irgendeinem der Ansprüche 9 bis 11, dadurch gekennzeichnet, dass es auf einem Positionieren der leuchtenden Querstriche in Abhängigkeit von den Massen, welche den oberen Grenzen der Toleranzbereiche entsprechen, mit denen die Tochterbleche abgeschnitten werden müssen, beruht.

13. Verfahren nach Anspruch 12, dadurch gekennzeichnet, dass in einem Fall, wo die Summe der der oberen Grenze entsprechenden Längen der zu gewinnenden Tochterbleche über der verwendbaren Länge ($L_u$) des Mutterblechs (TM) liegt, es auf einer Erstellung von Längen für die Tochterbleche beruht, deren Werte in den Grenzen der Toleranzbereiche liegen.

14. Verfahren nach irgendeinem der Ansprüche 9 bis 11, dadurch gekennzeichnet, dass es auf einem ausgewählten Positionieren der leuchtenden Querstriche zur Bestimmung eines Teils des Satzes von Tochterblechen mit einer Länge ($L_M$), die einer Maximallänge eines Toleranzbereichs entspricht, und eines Teils des Satzes mit einer Länge ($L_m$), die einer Minimallänge dieses Bereichs entspricht, nach folgendem Algorithmus beruht:

$$x = E \left[ \frac{L_u - E \left[ \frac{L_u}{L_m} \right] \cdot L_M}{L_M - L_m} \right]$$

$$y = E \left[ \frac{L_u}{L_m} \right] - x$$

wobei

$x$ = Anzahl der Tochterbleche mit Länge $L_M$

$y$ = Anzahl der Tochterbleche mit Länge $L_m$

$E$ = Faktor, der das Verhältnis der Summe der Längen der Tochterbleche zur verwendbaren Länge ($L_u$) des Mutterblechs (TM) angibt.

15. Verfahren nach irgendeinem der Ansprüche 9 bis 11, dadurch gekennzeichnet, dass zur Durchführung der Einschreibbarkeit eines in Längsrichtung gewölbten Mutterblechs es auf einem Anordnen des Netzes von leuchtenden Längs- und Querstrichen gemäss dem Algorithmus beruht:

$$l_r = l_{th} \left[ 1 - \frac{2f^2}{L^2} \right] - \frac{f}{4} \left[ 1 + \frac{4f^2}{L^2} \right]$$

$$L_r + L_{reb} = L \left[ \frac{1 + \frac{4f^2}{L^2} + \sqrt{1 + \frac{4f^2}{L^2}}}{2} \right]$$

wobei

$l_r$ = verwertbare Breite des gewölbten Mutterblechs

$l_{th}$ = theoretische Breite des gewölbten Mutterblechs

$f$ = Pfeilhöhe des Innenbogens (auf der Seite der Schiene 11) des gewölbten Mutterblechs

$L$ = Länge der Sehne des Innenbogens

$L_r$ = verwertbare Länge

$L_{reb}$ = verwertbare Länge nach Abkappen des Mutterblechs

16. Einrichtung zur Durchführung des Verfahrens nach irgendeinem der vorstehenden Ansprüche, mit einer Anzeichnungszone (8), Mitteln zur Dimensionierung (2, 5, 6) sowie Mitteln zur optischen Bestimmung der Einschreibbarkeit einer bestimmten Anzahl von Tochterblechen in ein Mutterblech, dadurch gekennzeichnet, dass die Mittel zur optischen Bestimmung der Einschreibbarkeit eine Gruppe von ersten Lichtquellen (14a, 14b), von denen jede einen leuchtenden Längsstrich auf das Mutterblech (TM) parallel zu den Längskanten desselben projizieren kann, wobei diese Quellen seitlich bezüglich dieser Kanten verschiebbar angebracht sind, eine Gruppe mehrerer zweiter Lichtquellen (13a bis 13g), von denen jede einen parallel zu sich selbst verschiebbaren leuchtenden Strich auf das Mutterblech quer zu den Längskanten desselben projizieren kann, Mittel (15, 30, 27) zur Verschiebung dieser Lichtquellen, Mittel (23, 39) zur Feststellung der Entwicklung der Lage derselben und Mittel zur Informationsverarbeitung (27), die ansprechend auf die Lagefeststellung in der Lage sind, Steuersignale auszuarbeiten, welche auf die Verschiebungsmittel zur Positionierung der Quellen gemäss einem vorgegebenen Anzeichnungsplan gegeben werden, umfassen.

17. Einrichtung nach Anspruch 16, dadurch gekennzeichnet, dass die Lichtquellen (20a, 20b, 31) Abtastlaser oder Laser mit Zylinderoptik umfassen.

18. Einrichtung nach irgendeinem der Ansprüche 16 und 17, dadurch gekennzeichnet, dass die Versetzungsmittel einen Schritt-Antriebsmotor (21, 38), welcher mit einer Schnecke (17, 34) gekoppelt ist, auf welcher sich durch Drehung der Schnecke ein Träger (19, 35) bewegen kann, der mit der betrachteten Quelle gekoppelt ist, aufweisen und dass die Feststellvorrichtung ebenfalls mit der Schnecke (17, 34) gekoppelt ist.

19. Einrichtung nach Anspruch 18, dadurch gekennzeichnet, dass die ersten Lichtquellen (20a und 20b) direkt auf ihrem Träger (18) angebracht sind, während die Schnecke auf einer Brücke (10) angebracht ist, welche vor der Anzeichnungszone (8) angeordnet ist und die Bahn der Mutterbleche (TM) überspannt.

20. Einrichtung nach Anspruch 18, dadurch gekennzeichnet, dass von den zweiten Lichtquellen (31) jede auf einem Anbringungselement (32) angebracht ist, welches um eine horizontale Achse schwenkt, wobei sich das Element um diese Achse dank eines Mechanismus (35, 36) drehen kann, welcher dieses mit dem Träger (35) koppelt, wobei die optische Achse der Quelle nach unten geneigt ist, während alle zweiten Lichtquellen im Abstand voneinander auf einer Galerie (12) angebracht sind, welche parallel längs der Anzeichnungszone (8) angeordnet ist.

21. Einrichtung nach irgendeinem der Ansprüche 16 bis 20, dadurch gekennzeichnet, dass eine Vorrichtung zur Herstellung einer Kopfreferenz (2) an dem den ersten Lichtquellen (14a, 14b) gegenüberliegenden Ende der Anzeichnungszone (8) angebracht ist.

22. Einrichtung nach irgendeinem der Ansprüche 16 bis 21, dadurch gekennzeichnet, dass sie einen Rechner (27) aufweist, welcher so angeschlossen ist, dass er die von den Detektoren (23, 39) kommenden Lagesignale empfängt und auf die Antriebsmittel (15, 30) Steuersignale abgibt, wobei der Rechner ferner mit einem Steuerpult (50) mit zugehörigem Bildschirm (51) verbunden ist.

23. Einrichtung nach Anspruch 22, dadurch gekennzeichnet, dass der Rechner (27) auch mit einer Schaltung (60) zur Feststellung der Temperatur des Mutterblechs für eine Kompensation der Dilatation des Mutterblechs (TM) verbunden ist.

24. Einrichtung nach Anspruch 22, dadurch gekennzeichnet, dass eine mit dem Rechner (27) verbundene Schaltung (62) zur Bestimmung der Dicke des Mutterblechs (TM) für eine Kompensation der Anzeichnungsfehler als Folge von unterschiedlichen Dicken der zu behandelnden Bleche vorgesehen ist.

25. Einrichtung nach irgendeinem der Ansprüche 21 bis 24, dadurch gekennzeichnet, dass der Rechner (27) mit Steuerschaltungen für die Dimensionierungsmittel (5, 6) für eine Übertragung von Lagedaten der Lichtquellen am Ende der Anzeichnung verbunden ist.

26. Einrichtung nach irgendeinem der Ansprüche 22 bis 25, dadurch gekennzeichnet, dass auch eine Markierungseinheit (3) zur Anbringung von Tochterblech-Identifikationsangaben auf jedem Mutterblech (TM) in Abhängigkeit von vom Rechner (27) kommenden Lagesignalen der Lichtquellen vorgesehen ist.

## Claims

1. A method for the treatment of rough sheets or mother sheets (TM) issuing from a rolling mill, so as to cut said sheets into daughter sheets of predetermined dimensions, comprising determining the inscribability of each mother sheet for establishing a marking plan permitting an optimum utilization of the mother sheet and then passing each mother sheet into means (5, 6) for cutting to length and cutting to width so as to cut out daughter sheets, characterized in that the operation for determining the inscribability comprises projecting onto the mother sheets (TM) a network of crossed luminous lines ($t_1$, $t_2$, $t_3$-a to $t_3$-g), selectively displacing each of said luminous line while maintaining it parallel to itself so as to define on the mother sheet a batch of daughter sheets to be obtained, plotting the coordinates of the luminous lines relative to a reference system pertaining to the mother sheet and cutting the mother sheet in accordance with the obtained coordinates.

2. A method according to claim 1, comprising cutting the end of one of the small edges of the mother sheet (TM) so as to obtain a length reference of said reference system.

3. A method according to claim 1, wherein a length reference of said system of coordinates is established by a luminous line which is projected transversely of the mother sheet (TM).

4. A method according to claim 1 or 3, wherein one of the luminous lines extending longitudinally of the mother sheet (TM) constitutes a width reference of said reference system.

5. A method according to any one of the claims 1 to 4, wherein the operation for determining the inscribability comprises forst of all shifting the longitudinal lines ($t_1$ and $t_2$) so as to determine the inscribability as concerns width (effective width $l_u$) and then shifting the transverse lines so as to determine the inscribability as concerns length (effective length $L_u$).

6. A method according to claim 5, comprising, in the course of the operation concerning the inscribability as concerns width, shifting one of the longitudinal luminous lines ($t_1$) so as to avoid unevennesses of one of the edge portions of the mother sheet and shifting the other longitudinal luminous line ($t_2$) in accordance with a theoretical width, then checking whether this other longitudinal luminous line sets aside the unevennesses of the other edge of the mother sheet and correcting, if required, the position of said line so as to set aside a larger edge unevenness, and at last validating the positions of the longitudinal luminous lines so as to plot the width coordinates.

7. A method according to claim 5 or 6 when dependent from claim 2 or 3, comprising, in the course of the operation relating to the inscribability as concerns length, shifting the foot luminous line which is the closest to the edge of the mother sheet opposed to the head reference edge so as to determine the effective length of said sheet setting aside the unevennesses of said edge, the other intermediate transverse luminous line being positioned in accordance with the lengths of the daughter sheets to be obtained, and validating the positions of all the transverse luminous lines so as to plot the length coordinates.

8. A method according to claim 7, comprising, in the course of the operation relating to the length inscribability, shifting at least some of the transverse luminous lines so as to set aside defects (D) present in the edge of the mother sheet (TM).

9. A method according to claim 7 or 8, wherein said other transverse luminous lines are automatically shifted as a function of optimization calculations effected by a computer (27) in which are introduced length data of said batch of daughter sheets to be obtained.

10. A method according to claim 9, comprising measuring the temperature of the mother sheet (TM) in the course of the marking and correcting the positions of the transverse luminous lines in accordance with the results of said measurement.

11. A method according to claim 9 or 10, comprising correcting the positions of the transverse luminous lines as a function of the thickness of the mother sheet (TM).

12. A method according to any one of the claims 9 to 11, comprising positioning the transverse luminous lines as a function of dimensions which correspond to upper limits of tolerance ranges to within which the daughter sheets must be cut.

13. A method according to claim 12, wherein in the case where the sum of the lengths of the daughter sheets to be obtained corresponding to said upper limit exceeds said effective length ($L_u$) of the mother sheet (TM), lengths for the daughter sheets whose values are within the limits of said tolerance ranges are established.

14. A method according to claim 9 or 11, comprising selectively positioning the transverse luminous lines for determining a part of said batch of daughter sheets having a length ($L_M$) corresponding to a maximum length of a tolerance range and a part of said batch having a length ($L_m$) corresponding to a minimum length of said tolerance range, in accordance with the algorithm:

$$x = E \left[ \frac{L_u - E \left[ \frac{L_u}{L_m} \right] \cdot L_M}{L_M - L_m} \right]$$

$$y = E \left[ \frac{L_u}{L_m} \right] - x$$

wherein:
x = number of daughter sheets of length $L_M$
y = number of daughter sheets of length $L_m$
E = factor indicating the ratio of the sum of the lengths of daughter sheets to said effective length ($L_u$) of the mother sheet (TM).

15. A method according to any one of the claims 9 to 11, comprising, for effecting the inscribability of a mother sheet bent in the direction of the length, positioning said network of longitudinal luminous lines and transverse luminous lines according to the algorithm:

$$l_r = l_{th} \left[ 1 - \frac{2f^2}{L^2} \right] - \frac{f}{4} \left[ 1 + \frac{4f^2}{L^2} \right]$$

$$L_r + L_{reb} = L \left[ \frac{1 + \frac{4f^2}{L^2} + \sqrt{1 + \frac{4f^2}{L^2}}}{2} \right]$$

wherein:
$l_r$ = recoverable width of the bent mother sheet
$l_{th}$ = theoretical width of the bent mother sheet
f = the rise of the inner arc (the side adjacent the rod (11)) of the bent mother sheet
L = length of the chord of the inner arc
$L_r$ = recoverable length
$L_{reb}$ = recoverable length after cutting the head of the mother sheet

16. An installation for carrying out the process according to any one of the preceding claims, comprising a marking zone (8), means for cutting to dimensions: (2, 5, 6) and means for optically determining the inscribability of a given number of daughter sheets in a mother sheet, wherein said means for optically determining the inscribability comprise a group of first ligth sources (14ᵃ, 14ᵇ) each capable of projecting a longitudinal luminous line on the mother sheet (TM) parallel to the longitudinal edges of the mother sheet, said sources being mounted in such manner as to be laterally movable relative to said edges, a group of a plurality of second ligth sources (13ᵃ - 13ᵍ) each capable of projecting a luminous line which is movable over the mother sheet while being maintained parallel to itself transversely of the longitudinal edges of the mother sheet, means (15, 30, 27) for shifting said light sources means (23, 39) for detecting the evolution of the position of the light sources, and means for processing information (27) capable, in response to said position detection, of producing control signals which are applied to said shifting means for positioning the sources in accordance with a given parking plan.

17. An installation according to claim 16, wherein said light sources (20ᵃ, 20ᵇ, 31) comprise sweeping lasers or lasers having a cylindrical optical element.

18. An installation according to claim 16 or 17, wherein said shifting means comprise a step-by-step driving motor (21, 38) coupled to a lead-screw (17, 34) on which is movable, by rotation of said lead-screw (17, 34), a support (19, 35) which is coupled to the considered source and said detector is also coupled to said lead-screw (17, 34).

19. An installation according to claim 18, wherein the first light sources (20ᵃ, 20ᵇ) are directly mounted on their support (18) whereas said lead-screw is mounted on a cross-beam (10) which is placed in front of the marking zone (8) and straddles the path of the mother sheets.

20. An installation according to claim 18, wherein the second light sources (31) are each mounted on a mounting element (32) which is pivotable about a horizontal axis, said mounting element being pivotable about said axis by a mechanism (35, 36) which couples it to said support (35), the optical axis of said source being downwardly inclined whereas all the second light sources being mounted in spaced-apart relation on a rail (12) which is placed parallel to and along the marking zone (8).

21. An installation according to any one of the claims 16 to 20, wherein a device for establishing a head reference (2) is mounted at the end of the marking zone (8) opposed to the first light sources (14ᵃ, 14ᵇ).

22. An installation according to any one of the claims 16 to 21, comprising a computer (27) connected to receive the position signals coming from said detectors (23, 39) and for transmitting control signals to said driving means (15, 30), said computer being further connected to a control desk (50) with an associated display screen (51).

23. An installation according to claim 22, wherein said computer (27) is also connected to a circuit (60) for detecting the temperature of the mother sheet for the purpose of compensating for expansion of the mother sheet (TM).

24. An installation according to claim 22, comprising a circuit (62) for determining the thickness of the mother sheet (TM) connected to said computer (27) for compensating for marking errors due to different thicknesses ot the sheets to be treated.

25. An installation according to any one of the claims 21 to 24, wherein said computer (27) is connected to control circuits for the means (5, 6) for cutting the mother sheet to dimensions, for the transmission of position data of the light sources at the end of the marking.

26. An installation according to any one of the claims 22 to 25, further comprising a marking unit (3) for affixing to each mother sheet (TM) identification indications of the daughter sheets in accordance with signals of position of said light sources coming from said computer (27).

FIG. 1

FIG. 2

0 134 366

FIG.3

FIG.7

0 134 366

FIG. 4

FIG. 5

FIG.6

## FIG. 8